(19) Europäisches Patentamt
European Patent Office
Office européen des brevets

(11) **EP 2 724 123 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(21) Anmeldenummer: **12730455.8**

(22) Anmeldetag: **19.06.2012**

(51) Int Cl.:
*G01F 1/66* (2006.01)    *G01F 25/00* (2006.01)

(86) Internationale Anmeldenummer:
**PCT/EP2012/061703**

(87) Internationale Veröffentlichungsnummer:
**WO 2012/175493 (27.12.2012 Gazette 2012/52)**

(54) **VERFAHREN ZUR ERMITTLUNG DES DURCHFLUSSES VON FLUIDEN NACH DEM ULTRASCHALLLAUFZEITVERFAHREN**

METHOD FOR DETERMINING THE FLOW RATE OF FLUIDS USING THE ULTRASONIC TRANSIT-TIME METHOD

PROCÉDÉ DE DÉTERMINATION DU DÉBIT DE FLUIDES PAR LA MÉTHODE DE LA MESURE DU TEMPS DE PROPAGATION D'ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2011 AT 09302011**

(43) Veröffentlichungstag der Anmeldung:
**30.04.2014 Patentblatt 2014/18**

(73) Patentinhaber: **AVL List GmbH**
**8020 Graz (AT)**

(72) Erfinder:
• **KUDLATY, Katarzyna**
  **A-8042 Graz (AT)**
• **WIESINGER, Michael**
  **A-8010 Graz (AT)**
• **NÖHAMMER, Stefan**
  **A-8010 Graz (AT)**
• **WITRISAL, Klaus**
  **A-8042 Graz (AT)**
• **KUBIN, Gernot**
  **A-8046 Graz (AT)**

(74) Vertreter: **Patentanwälte Pinter & Weiss OG**
**Prinz-Eugen-Straße 70**
**1040 Wien (AT)**

(56) Entgegenhaltungen:
DE-A1-102005 037 458     US-A- 4 486 862
US-A1- 2008 282 808

**Beschreibung**

Die Erfindung betrifft ein Verfahren zur Ermittlung des Durchflusses von Fluiden nach dem Ultraschalllaufzeitverfahren, wobei die Strömungsgeschwindigkeit und daraus der Durchfluss des Fluids aus der Laufzeit von Ultraschallsignalen durch die Messstrecke ermittelt wird, wobei die Übertragungsfunktion der Messstrecke zumindest näherungsweise bestimmt wird.

Ultraschallsensorik zur Messung des Volumens- und Massendurchflusses auf Basis des Laufzeitverfahrens kann heute als etablierte hochpräzise Messtechnik angesehen werden. Die erreichbare Genauigkeit solcher Messgeräte wird durch die Einflüsse des Übertragungssystems bestimmt, die im Fall eines zeitlich invarianten Systems durch Kalibrierung eliminiert werden können.

In der Anwendung der Durchflussmessung können die Ursachen für die Veränderung der Übertragungsfunktion der Ultraschallwandler vielfältig sein (wie zum Beispiel Verschmutzung, Luftfeuchte oder Alterungsprozesse der Materialien). Die sich ändernden Übertragungsfunktionen der Wandler wirken sich als Drift der Messgröße aus.

Dazu zeigt die DE 10 2005 037 458 A1 eine Möglichkeit diesen Drift zu kompensieren indem eine elektrische Betriebsgröße wie zum Beispiel die am Ultraschallwandler abfallende Spannung gemessen wird. Aus diesem Signal wird infolge einer Korrekturgröße abgeleitet die zur Kompensation des Drifts des Ultraschallsensors herangezogen werden kann.

Die Aufgabe der Erfindung war ein verbessertes Verfahren, mit welchem diese Drift berücksichtigt und damit die Meßergebnisse verbessert werden.

Zur Lösung dieser Aufgabe ist erfindungsgemäß vorgesehen, dass zumindest eine Ultraschalllaufzeit mittels eines Korrekturwerts, bestimmt aus der Gruppenlaufzeit der Übertragungsfunktion, korrigiert wird.

Vorteilhafterweise wird der Korrekturwert regelmäßig im laufenden Betrieb bestimmt.

Gemäß einer weiteren Ausführungsvariante der Erfindung ist vorgesehen, dass die Übertragungsfunktion durch Bestimmung der elektrischen Impedanz des Ultraschallwandlers an zumindest drei Frequenzpunkten angenähert wird.

Eine weitere Variante der Erfindung ist dadurch gekennzeichnet, dass die Übertragungsfunktion aus der FFT des Empfangssignals bestimmt wird.

Alternativ dazu könnte die Übertragungsfunktion aus der FFT der Korrelation aus dem Empfangssignal mit dem Sendesignal bestimmt werden.

Erfindungsgemäß kann vorgesehen sein, dass ein theoretisches Modell der Übertragungsfunktion gebildet wird und die Modellparameter mittels Fitverfahren bestimmt werden.

Eine vorteilhafte Ausführungsvariante der Erfindung sieht vor, dass der tatsächliche Abstand zwischen den Sensoren durch Multiplikation der korrigierten Laufzeit mit einer, aus einer genauen Temperaturmessung bestimmten Schallgeschwindigkeit, berechnet wird.

Dabei ist es besonders zweckmäßig, wenn der tatsächliche Abstand zwischen den Sensoren regelmäßig im laufenden Betrieb bestimmt wird.

In der nachfolgenden Beschreibung soll die Erfindung beispielhaft und unter Bezugnahme auf die beigefügten Zeichnungen näher erläutert werden.

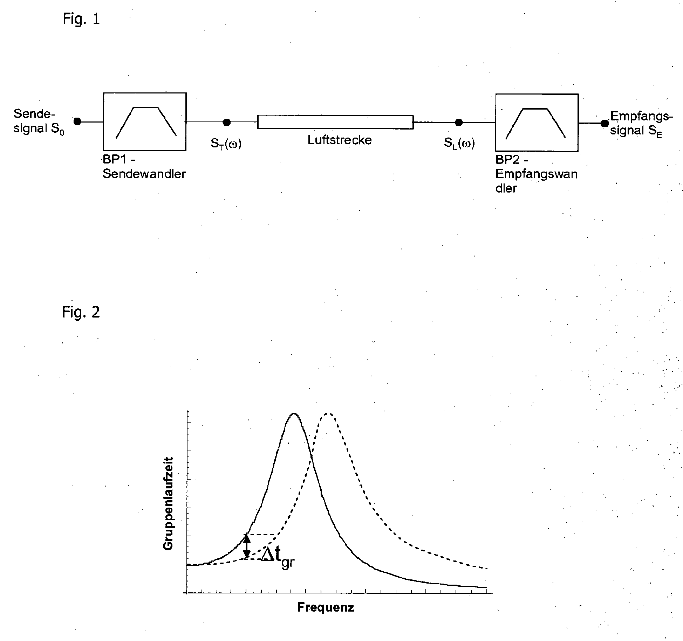

Dabei zeigt die Fig. 1 schematisch die Übertragungsstrecke eines Ultraschallimpulses, und Fig. 2 ist eine Darstellung der Laufzeitfehler durch die Veränderung er Übertragungsfunktion der Ultraschallwandler.

Entsprechend Fig. 1 kann die Messstrecke mit folgenden Komponenten dargestellt werden: Bandpassfilter BP1 (Sendewandler), Luftstrecke und Bandpassfilter BP2 (Empfangswandler). Dabei bezeichnet S0 die FFT des Sendesignals, ST die FFT des gesendeten (transmitted) Signals, SL die FFT des Signals nach der Luftstrecke vor dem Eintritt auf den Empfangswandler und SE die FFT des empfangenen Signals (nach Filter BP2). FFT ist die Abkürzung für "schnelle Fourier-Transformation" (engl.: Fast Fourier Transform). Die FFT ist ein Algorithmus zur effizienten Berechnung der Werte einer diskreten Fourier-Transformation, wobei im Gegensatz zur direkten Berechnung zuvor berechnete Zwischenergebnisse berücksichtigt und derart arithmetische Rechenoperationen eingespart werden.

Es sind verschiedene Methoden zu Laufzeitbestimmung bekannt, die eingesetzt werden können, wie zum Beispiel das Triggerverfahren, die Nutzung der Phasenbestimmung oder das Korrelationsverfahren. Bei diesen Verfahren wird eine mittlere Signallaufzeit bestimmt, die sich aus der Gesamtübertragungsfunktion der Einzelkomponenten ergibt.

$$t_{mess} = t_{Luft} + t_{BP1} + t_{BP2}$$

Dabei stellt $t_{mess}$ die gemessene Laufzeit dar, die $t_{Luft}$ - die Schalllaufzeit in der Luftstrecke, $t_{BP1}$ - Signallaufzeit durch den ersten Bandpassfilter (Gruppenlaufzeit) und $t_{BP2}$ -Gruppenlaufzeit des zweiten Filters.

Die Messgröße der Durchflussmessung entspricht der Änderung der Übertragungsfunktion der Luftstrecke L(ω), während etwaige Veränderungen der Übertragungsfunktionen der beiden Bandpassfilter als Störgröße wirken.

$$S_T(\omega) = S_0(\omega)BP_1(\omega)$$

$$S_L(\omega) = S_T(\omega)L(\omega) = S_0(\omega)BP_1(\omega)L(\omega)$$

$$S_E(\omega) = S_L(\omega)BP_2(\omega) = S_0(\omega)BP_1(\omega)L(\omega)BP_2(\omega)$$

$$S_E(\omega) = S_0(\omega)\left|BP\right|_1 e^{j\phi_{BP1}}\left|BP\right|_2 e^{j\phi_{BP2}}\left|1\right|e^{j\phi_L}$$

Dabei BP1 und BP2 stellen die komplexe Übertragungsfunktion der beiden Bandpassfilter, mit dem Betrag |BP1|, |BP2| und der Phase $\Phi_1$ und $\Phi_2$ dar.

Die Erklärung für diese Drift liegt in der Veränderung der Gruppenlaufzeit der beiden Bandpassfilter wie in der Fig. 2 dargestellt. Wird diese Drift durch Kalibrierung eliminiert, so ist dies nicht während des Messbetriebes, sondern nur als Nullabgleich unter genau kontrollierenden Umgebungsbedingengen möglich.

$$\Delta t = t_{BP1} + t_{BP2} = t_{mess} - t_{Luft,0,theoretisch}$$

$$t_{Luft} = t_{mess} - \Delta t$$

Bei diesem Verfahren werden die aktuellen Werte der Gruppelaufzeit der Ultraschallsensoren, durch einen Vergleich der gemessenen Laufzeit ($t_{mess}$) mit einer theoretischen Schalllaufzeit ohne Strömung ($t_{Luft,0;theoretisch}$) bestimmt. Diese Korrekturfaktoren werden nachträglich in laufendem Betrieb von der gemessenen Laufzeit abgezogen und somit die Schalllaufzeit in der Luftstrecke ($t_{Luft}$) bestimmt.

Mit dem erfindungsgemäßen Verfahren kann die Nullpunktskompensation regelmäßig im laufenden Messbetrieb erfolgen. Dazu wird die Übertragungsfunktion der Messstrecke zumindest näherungsweise bestimmt wird und zumindest eine Ultraschalllaufzeit mittels eines Korrekturwerts, bestimmt aus der Gruppenlaufzeit der Übertragungsfunktion, korrigiert. Dieser Korrekturwert kann dabei regelmäßig im laufenden Betrieb bestimmt werden.

Für die Bestimmung der Übertragungsfunktion gibt es mehrere Möglichkeiten, wobei sie bevorzugt durch Bestimmung der elektrischen Impedanz des Ultraschallwandlers an zumindest drei Frequenzpunkten angenähert wird, aber auch aus der der FFT des Empfangssignals oder der FFT der Korrelation aus dem Empfangssignal mit dem Sendesignal bestimmt werden kann. Gegebenenfalls könnte auch ein theoretisches Modell der Übertragungsfunktion gebildet und die Modellparameter mittels Fitverfahren bestimmt werden.

Von apparativer Seite her ist zur Verbesserung der Messergebnisse zusätzlich vorgesehen, dass der tatsächliche Abstand zwischen den Sensoren durch Multiplikation der korrigierten Laufzeit mit einer, aus einer genauen Temperaturmessung bestimmten Schallgeschwindigkeit, berechnet wird. Auch hier kann der tatsächliche Abstand zwischen den Sensoren regelmäßig im laufenden Betrieb bestimmt werden.

**Patentansprüche**

1. Verfahren zur Ermittlung des Durchflusses von Fluiden nach dem Ultraschalllaufzeitverfahren, wobei die Strömungsgeschwindigkeit und daraus der Durchfluss des Fluids aus der Laufzeit von Ultraschallsignalen durch die Messstrecke ermittelt wird, wobei die Übertragungsfunktion der Messstrecke zumindest näherungsweise bestimmt wird, **dadurch gekennzeichnet, dass** zumindest eine Ultraschalllaufzeit mittels eines Korrekturwerts, bestimmt aus der Gruppenlaufzeit der Übertragungsfunktion, korrigiert wird.

2. Verfahren nach Anspruch 1, **dadurch gekennzeichnet, dass** der Korrekturwert regelmäßig im laufenden Betrieb bestimmt wird.

**3.** Verfahren nach Anspruch 1, **dadurch gekennzeichnet, dass** der tatsächliche Abstand zwischen den Sensoren durch Multiplikation der korrigierten Laufzeit mit einer, aus einer genauen Temperaturmessung bestimmten Schallgeschwindigkeit, berechnet wird.

**4.** Verfahren nach Anspruch 3, **dadurch gekennzeichnet, dass** der tatsächliche Abstand zwischen den Sensoren regelmäßig im laufenden Betrieb bestimmt wird.

**5.** Verfahren nach Anspruch 1, **dadurch gekennzeichnet, dass** die Übertragungsfunktion durch Bestimmung der elektrischen Impedanz des Ultraschallwandlers an zumindest drei Frequenzpunkten angenähert wird.

**6.** Verfahren nach Anspruch 1, **dadurch gekennzeichnet, dass** die Übertragungsfunktion aus der FFT des Empfangssignals bestimmt wird.

**7.** Verfahren nach Anspruch 1, **dadurch gekennzeichnet, dass** die Übertragungsfunktion aus der FFT der Korrelation aus dem Empfangssignal mit dem Sendesignal bestimmt wird.

**8.** Verfahren nach Anspruch 1, **dadurch gekennzeichnet, dass** ein theoretisches Modell der Übertragungsfunktion gebildet wird und die Modellparameter mittels Fitverfahren bestimmt werden.

**Claims**

**1.** A method for determining the flow rate of fluids using the ultrasonic transit time method, wherein the flow speed and therefrom the flow rate of the fluid is determined from the transit time of ultrasound signals through the measurement section, wherein the transmission function of the measurement section is determined at least approximately, **characterized in that** at least one ultrasonic transit time is corrected by means of a correction value that is determined from a group transit time of the transmission function.

**2.** The method according to claim 1, **characterized in that** the correction value is regularly determined during the operation.

**3.** The method according to claim 1, **characterized in that** the actual distance between the sensors is calculated by multiplying the corrected transit time by a sound velocity that is determined from an accurate temperature measurement.

**4.** The method according to claim 3, **characterized in that** the actual distance between the sensors is regularly determined during the operation.

**5.** The method according to claim 1, **characterized in that** the transmission function is approximated by determining the electrical impedance of the ultrasonic converter at least at three frequency points.

**6.** The method according to claim 1, **characterized in that** the transmission function is determined from the FFT of the receive signal.

**7.** The method according to claim 1, **characterized in that** the transmission function is determined from the FFT of the correlation between the receive signal and transmit signal.

**8.** The method according to claim 1, **characterized in that** a theoretical model of the transmission function is formed, and the model parameters are determined by means of the fitting method.

**Revendications**

**1.** Procédé de détermination de l'écoulement de fluides selon le procédé de temps de propagation d'ultrasons, la vitesse d'écoulement et par conséquent l'écoulement du fluide étant déterminés à partir du temps de propagation de signaux ultrasonores sur le trajet de mesure, la fonction de transfert du trajet de mesure étant déterminée au moins de façon approchée, **caractérisé en ce qu'**au moins un temps de propagation d'ultrasons est corrigé au moyen d'une valeur de correction qui est déterminée à partir du temps de propagation de groupe de la fonction de transfert.

2. Procédé selon la revendication 1, **caractérisé en ce que** la valeur de correction est déterminée régulièrement pendant le fonctionnement.

3. Procédé selon la revendication 1, **caractérisé en ce que** l'on calcule la distance réelle entre les capteurs en multipliant le temps de propagation corrigé par la vitesse du son déterminée à partir d'une mesure précise de la température.

4. Procédé selon la revendication 3, **caractérisé en ce que** l'on détermine la distance réelle entre les capteurs régulièrement pendant le fonctionnement.

5. Procédé selon la revendication 1, **caractérisé en ce que** l'on effectue une approximation de la fonction de transfert en déterminant l'impédance électrique du transducteur ultrasonore en au moins trois points de fréquence.

6. Procédé selon la revendication 1, **caractérisé en ce que** l'on détermine la fonction de transfert à partir de la FFT du signal reçu.

7. Procédé selon la revendication 1, **caractérisé en ce que** l'on détermine la fonction de transfert à partir de la FFT de la corrélation du signal reçu avec le signal transmis.

8. Procédé selon la revendication 1, **caractérisé en ce que** l'on forme un modèle théorique de la fonction de transfert et l'on détermine les paramètres du modèle par un procédé d'ajustement.

Fig. 1

Sendesignal $S_0$ ● ☐ BP1 - Sendewandler ● $S_T(\omega)$ ☐ Luftstrecke ● $S_L(\omega)$ ☐ BP2 - Empfangswandler ● Empfangs-signal $S_E$

BP1 -
Sendewandler

Luftstrecke

BP2 -
Empfangswan
dler

Fig. 2

Gruppenlaufzeit

$\Delta t_{gr}$

Frequenz

**IN DER BESCHREIBUNG AUFGEFÜHRTE DOKUMENTE**

**In der Beschreibung aufgeführte Patentdokumente**

- DE 102005037458 A1